# EUROPEAN PATENT APPLICATION

(11) **EP 1 801 353 A2**
(43) Date of publication of application: **27.06.2007**
(21) Application number: 06126906.4
(22) Date of filing: 21.12.2006
(51) Int. Cl.: F01D 5/28

(54) **Method of coating internal passages of gas turbine components**

(30) Priority: 21.12.2005 US 314755
(71) Applicant: General Electric Company, Schenectady, NY 12345 (US)
(72) Inventor: Rucker, Michael Howard, Cincinnati, OH 45209 (US); Gupta, Bhupendra Kumar, Cincinnati, OH 45209 (US); Saylor, Matthew David, Blanchester, OH 45107 (US); Das, Nripendra Nath, West Chester, OH 45069 (US)
(74) Representative: Illingworth-Law, William Illingworth

(57) **Abstract**

A method (100) of forming a metal coating on surfaces of internal passages of a turbine blade (40), the turbine blade having an outer surface and comprising at least one internal passage. The method includes injecting (102) a paint into at least one of the internal passages of the turbine blade, and heat treating (104) the turbine blade such that an aluminide coating is deposited on the surface of the at least one internal passage.

## Description

### BACKGROUND OF THE INVENTION

This invention relates generally to gas turbine engines, and more particularly, to methods of depositing protective coatings on components of gas turbine engines.

Gas turbine engines typically include high and low pressure compressors, a combustor, and at least one turbine. The compressors compress air which is mixed with fuel and channeled to the combustor. The mixture is then ignited for generating hot combustion gases, and the combustion gases are channeled to the turbine which extracts energy from the combustion gases for powering the compressor, as well as producing useful work to propel an aircraft in flight or to power a load, such as an electrical generator.

The operating environment within a gas turbine engine is both thermally and chemically hostile. Significant advances in high temperature alloys have been achieved through the formulation of iron, nickel and cobalt-base superalloys, though components formed from such alloys often cannot withstand long service exposures if located in certain sections of a gas turbine engine, such as the turbine, combustor and augmentor. A common solution is to provide turbine, combustor and augmentor components with an environmental coating that inhibits oxidation and hot corrosion, or a thermal barrier coating (TBC) system that, in addition to inhibiting oxidation and hot corrosion, also thermally insulates the component surface from its operating environment.

Coating materials that have found wide use as environmental coatings include diffusion aluminide coatings. Aluminide coatings are generally applied to the internal passageways of turbine components to provide environmental protection of the nickel substrate base metal. Processes such as Vapor Phase Aluminiding (VPA), Chemical Vapor Deposition (CVD), or slurry injection are typically utilized to deposit the aluminide. While VPA and CVD aluminiding techniques are useful methods for producing an aluminide coating on a bulk part, they are less capable of selectively producing an aluminide coating only on an internal surface of a turbine component cooling hole.

Moreover, slurry injection aluminide techniques are an effective method for selectively coating internal cavities of engine hardware. Slurry injection involves injecting the internal cavity with thick aluminum rich slurry, heat treating the slurry to produce an aluminide coating, and then removing the residual slurry from the coated cavity. However, when the diameter of a cooling hole becomes too small, the relatively thick slurry can not be readily injected into the cooling holes. Additionally, coating coverage uniformity with a slurry process is dependent on the furnace attitude during diffusion heat treatment. Lastly, complete removal of the relatively thick residual slurry after heat treatment can be challenging.

### BRIEF DESCRIPTION OF THE INVENTION

In one aspect, a method of forming a metal coating on surfaces of internal passages of a turbine blade is provided. The method includes injecting a paint into at least one of the internal passages of the turbine blade, and heat treating the turbine blade such that an aluminide coating is deposited on the surface of the at least one internal passage.

### BRIEF DESCRIPTION OF THE DRAWINGS

Embodiments of the present invention will now be described, by way of example only, with reference to the accompanying drawings, in which:
Figure 1 is schematic illustration of a gas turbine engine;
Figure 2 is a perspective schematic illustration of a turbine rotor blade shown in Figure 1;
Figure 3 is an internal schematic illustration of the turbine rotor blade shown in Figure 2; and
Figure 4 is a flow diagram of a method of coating the internal passages of the turbine rotor blade shown in Figure 2.

### DETAILED DESCRIPTION OF THE INVENTION

A method of coating the internal passages of a turbine rotor blade with a metal coating is described below in detail. The method includes coating the internal cooling passages utilizing a CVD process to deposit a diffusion aluminide coating on the interior surfaces to protect the internal serpentine cooling passage from oxidation and hot corrosion. The process operates at lower temperatures than known coating process, and encompasses fewer steps than known coating process, thereby, lowering production time and manufacturing costs.

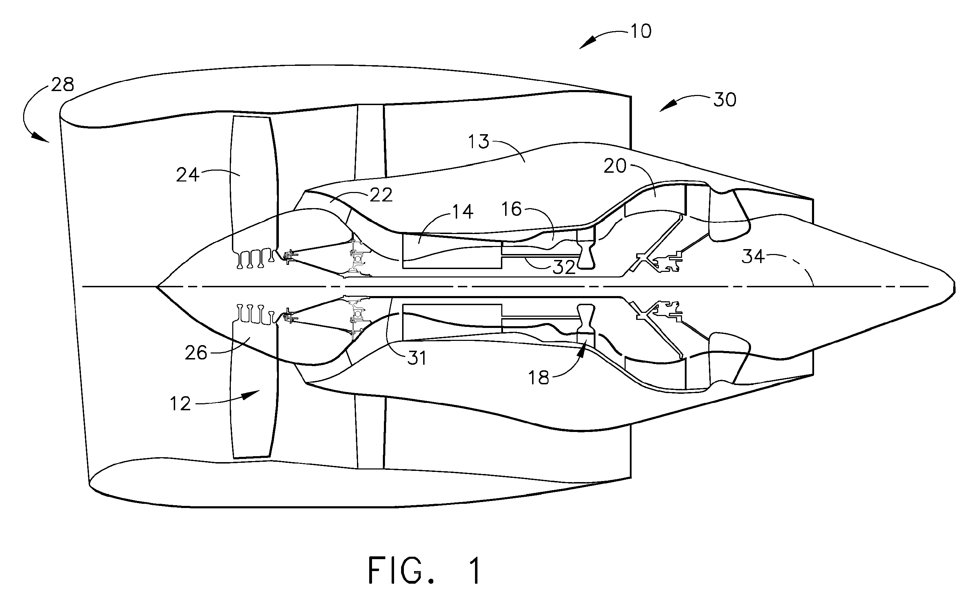

Referring to the drawings, Figure 1 is a schematic illustration of a gas turbine engine 10 that includes a fan assembly 12 and a core engine 13 including a high pressure compressor 14, a combustor 16, and a high pressure turbine 18. Engine 10 also includes a low pressure turbine 20, and a booster 22. Fan assembly 12 includes an array of fan blades 24 extending radially outward from a rotor disc 26. Engine 10 has an intake side 28 and an exhaust side 30. In one embodiment, the gas turbine engine is a GE90 available from General Electric Company, Cincinnati, Ohio. Fan assembly 12 and turbine 20 are coupled by a first rotor shaft 31, and compressor 14 and turbine 18 are coupled by a second rotor shaft 32.

During operation, air flows through fan assembly 12, along a central axis 34, and compressed air is supplied to high pressure compressor 14. The highly compressed air is delivered to combustor 16. Airflow (not shown in Figure 1) from combustor 16 drives turbines 18 and 20, and turbine 20 drives fan assembly 12 by way of shaft 31.

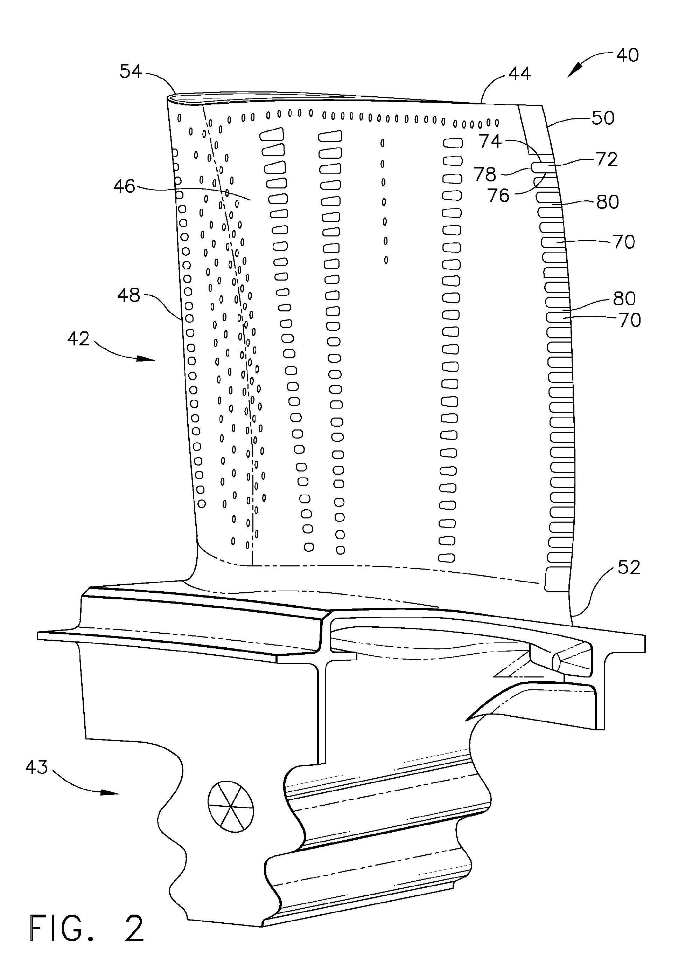

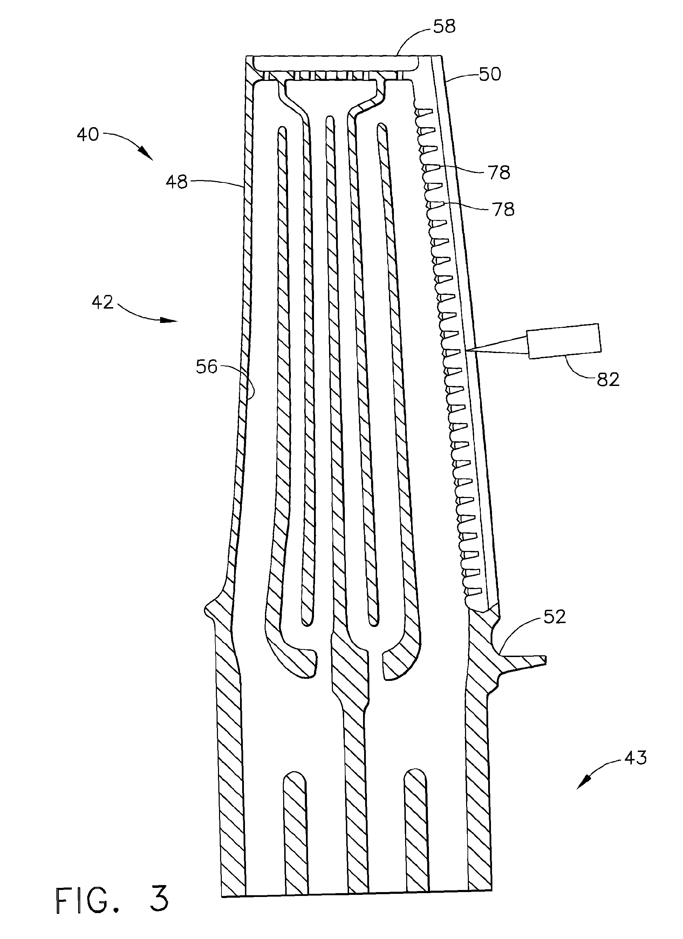

Figure 2 is a perspective schematic illustration of a turbine rotor blade 40 that may be used with gas turbine engine 10 (shown in Figure 1). Figure 3 is an internal schematic illustration of turbine rotor blade 40. Referring to Figures 2 and 3, in an exemplary embodiment, a plurality of turbine rotor blades 40 form a high pressure turbine rotor blade stage (not shown) of gas turbine engine 10. In the exemplary embodiment, each rotor blade 40 is fabricated from a nickel based material and includes a hollow airfoil 42 and an integral dovetail 43 used for mounting airfoil 42 to a rotor disk (not shown) in a known manner.

Airfoil 42 includes a first sidewall 44 and a second sidewall 46. First sidewall 44 is convex and defines a suction side of airfoil 42, and second sidewall 46 is concave and defines a pressure side of airfoil 42. Sidewalls 44 and 46 are connected at a leading edge 48 and at an axially-spaced trailing edge 50 of airfoil 42 that is downstream from leading edge 48.

First and second sidewalls 44 and 46, respectively, extend longitudinally or radially outward to span from a blade root 52 positioned adjacent dovetail 43 to a tip plate 54 which defines a radially outer boundary of an internal cooling chamber 56. Cooling chamber 56 is defined within airfoil 42 between sidewalls 44 and 46. Internal cooling of airfoils 42 is known in the art. In the exemplary embodiment, cooling chamber 56 includes a serpentine passage 58 cooled with compressor bleed air.

Cooling cavity 56 is in flow communication with a plurality of trailing edge slots 70 which extend longitudinally (axially) along trailing edge 50. Particularly, trailing edge slots 70 extend along pressure sidewall 46 to trailing edge 50. Each trailing edge slot 70 includes a recessed wall 72 separated from pressure sidewall 46 by a first sidewall 74 and a second sidewall 76. A cooling cavity exit opening 78 extends from cooling cavity 56 to each trailing edge slot 70 adjacent recessed wall 72. Each recessed wall 72 extends from trailing edge 50 to cooling cavity exit opening 78. A plurality of lands 80 separate each trailing edge slot 70 from an adjacent trailing edge slot 70. Sidewalls 74 and 76 extend from lands 80.

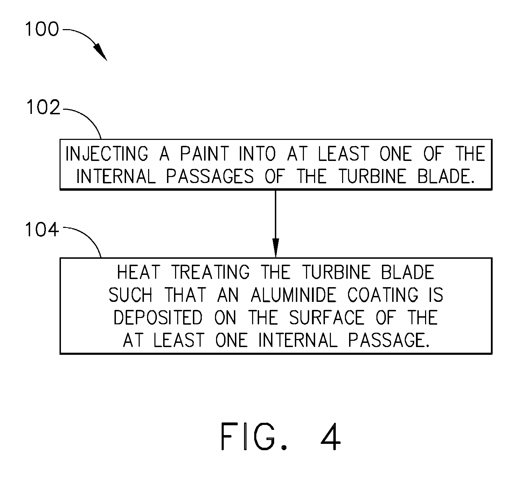

Figure 4 is a flow diagram of a method 100 of coating the internal passages 56 of the turbine rotor blade 40 shown in Figure 2. In the exemplary embodiment, method 100 includes depositing 102 a layer of aluminum-based paint on the internal surface of at least a portion of turbine rotor blade 40. The term, "paint" is used throughout to represent a relatively thin slurry or mixture that includes a water-based binder and a plurality of aluminum particles each having a diameter that is approximately 1 x 10⁻⁹ that are mixed with the binder.

The paint is injected into at least one opening in turbine blade 40 that has a diameter that is less than approximately 0.003 inches (3 mils). In the exemplary embodiment, paint is injected into at least one opening that has a diameter that is between approximately 0.002 inches (2 mils) and approximately 0.003 inches (3 mils), such as, openings 78, for example. In the exemplary, embodiment, the paint is injected into the turbine blade openings 78 utilizing a pneumatic injection syringe 82.

Method 100 also includes heat treating 104 the painted turbine blade utilizing a diffusion heat treatment process to promote a metallurgical interaction between the layer of aluminum and the turbine blade nickel substrate. In the exemplary embodiment, the fusion heat treatment process is operated within a temperature range between approximately 1700° Fahrenheit (F) and approximately 1950° F. In the exemplary embodiment, the turbine blade 40 is heat treated utilizing the fusion heat treatment process between approximately one hour and approximately two hours. Specifically, the time and temperature to perform the fusion heat treatment process is predetermined based on the metallurgical thickness results yielded by the process.

As a result of the fusion heat treatment process, the water-based binder of the aluminum paint is evaporated away such that an aluminide coating having a thickness between approximately 0.001 inches and approximately 0.003 inches in thickness is deposited on the surface of the at least one internal passages of the turbine blade.

The above described process 100 provides for coating the internal surfaces of relatively small openings defined within or through turbine blade 40 with a protective aluminide coating. Specifically, process 100 includes utilizing an injection device to inject an aluminum based paint into the openings and then utilizing a diffusion heat treatment process such that the paint binder is evaporated away such that an aluminide coating is deposited onto a surface of the openings.

While the invention has been described in terms of various specific embodiments, those skilled in the art will recognize that the invention can be practiced with modification within the spirit and scope of the claims.

## Claims

1. A method (100) of forming a metal coating on surfaces of internal passages of a turbine blade (40), the turbine blade having an outer surface and comprising at least one internal passage, said method comprising: injecting (102) a paint into at least one of the internal passages of the turbine blade; and heat treating (104) the turbine blade such that an aluminide coating is deposited on the surface of the at least one internal passage.

2. A method (100) in accordance with Claim 1 further comprising heat treating (104) the turbine blade (40) utilizing a diffusion heat treating process.

3. A method (100) in accordance with Claim 1 further comprising utilizing a pneumatic injection syringe (82) to inject the aluminum based paint into at least one internal passage of the turbine blade (40).

4. A method (100) in accordance with Claim 1 wherein the turbine blade (40) is fabricated from a nickel based material, said method further comprising heat treating (104) the turbine blade such that an interaction occurs between the aluminum based paint and the nickel based material.

5. A method (100) in accordance with Claim 1 wherein the turbine blade passage has a diameter that is less than approximately 0.003 inches, said method further comprising injecting (102) the aluminum based paint into the at least one turbine blade passage.

6. A method (100) in accordance with Claim 1 wherein the turbine blade passages include at least one opening (78) that extends from an airfoil trailing edge (50) to a cavity (56) defined within the airfoil (42), said method further comprises injecting (108) the aluminum based paint into the at least one opening.

7. A method (100) in accordance with Claim 1 further comprising injecting (102) an aluminum based paint into at least one of the internal passages of the turbine blade (40).

8. A method (100) in accordance with Claim 1 wherein the paint includes a water-based binder and a plurality of aluminum particles, said method further comprising heat treating (104) the paint such that the water based binder evaporates and such that the aluminum particles form an aluminide coating on the surface of the passages.

9. A method (100) in accordance with Claim1 further comprising heat treating (104) the turbine blade (40) such that an aluminide coating having a thickness between approximately 0.001 inches and approximately 0.003 inches in thickness is deposited on the surface of the at least one internal passage.

10. A turbine blade (40) having a metal coating on at least a portion of the surfaces of the internal passages of the blade wherein the metal coating is formed in accordance with Claim 1.
